# EUROPEAN PATENT SPECIFICATION

(11) **EP 3 832 868 B1**
(45) Date of publication and mention of the grant of the patent: **11.06.2025**
(21) Application number: 21154897.9
(22) Date of filing: 12.03.2019
(51) Int. Cl.: H02M 3/156, H02M 1/00

(54) **EMERGENCY LIGHTING BUCK CONVERTER**
NOTBELEUCHTUNGSABWÄRTSWANDLER
CONVERTISSEUR ABAISSEUR DE TENSION D'ÉCLAIRAGE DE SECOURS

(30) Priority: 12.03.2018 GB 201804248
(43) Date of publication of application: 09.06.2021
(62) Divisional of application: 19711287.3
(73) Proprietor: Tridonic GmbH & Co. KG, 6851 Dornbirn (AT)
(72) Inventor: Shukla, Jagjitpati, 6850 Dornbirn (AT); Makwana, Deepak, 6850 Dornbirn (AT)
(74) Representative: Rupp, Christian

(56) References cited:
- US-A1- 2012 133 295
- US-A1- 2013 100 711
- US-A1- 2016 126 848
- US-A1- 2016 291 682

## Description

The invention relates to a buck converter for supplying a battery, as well as to a LED converter, such as for example an emergency light LED converter, and a method for operating a buck converter for supplying a battery.

The invention relates to a particularly kind of buck converter in which the buck switch is ground-referenced.

Such a buck converter may find application as a charging circuitry for being supplied with a DC voltage derived from an AC mains voltage for example, for charging at its output terminals, a battery. This battery may be used in order to drive lighting means, such as for example a LED load, in the framework of emergency lighting means. To that regard, one or more additional converter stages may be arranged between the battery supply voltage and the lighting means.

Typically, a control circuitry, such as for example an ASIC or a microcontroller is provided which controls at least the buck switch between the conducting and the non-conducting state. In addition, typically, the control circuitry is supplied with a plurality of feedback signals on the basis of which the control circuitry determines the appropriate switching-over operations of the buck switch.

A typical control approach is that during the conducting state of the buck switch, the current through the switch is monitored and the switch is controlled into the non-conducting state as soon as the increasing buck switch current reaches a given switching-off threshold.

Once the buck switch is switched off, the LED current continues to be driven via an inductor of the buck converter in a freewheeling path comprising a diode.

Typically, it has to be determined when this decaying current, driven by the inductor, reaches the zero level. In the so-called critical conduction mode, the conducting state of the switch is immediately controlled as soon as the current reaches the zero level. In the discontinuous mode a given time period is allowed to lapse between the inductor current reaching the zero level and the switching-on of the buck switch.

Furthermore, the control parameters, such as for example the switching-off threshold for the buck switch current, have to be adapted to feedback-control the required battery voltage. To that regard, the control circuitry needs a feedback information as to the current level of the battery voltage. Thus, typically a plurality of feedback paths with matching input pins of the control circuitry have to be provided for the buck switch current, the timing of the zero crossing of the freewheeling current (inductor current), the battery voltage, and typically also the supplying DC bus voltage.

Relevant prior art can be found, for example, in the patent literature US 2016/291682 A1, US 2013/100711 A1, US 2016/126848 A1 and US 2012/133295 A1.

The invention now targets of a simplification of this feedback path in order to reduce the required number of input pins at the control circuitry.

This object is achieved via the means of the independent claims. The depending claim develops further the central idea of the invention.

According to a first aspect of the invention, a buck converter for supplying a battery is provided. The buck converter comprises a serious connection of a diode and a buck switch, the serious connection being connected between a DC bus voltage (which may have a ripple) and a ground reference. An inductor is connected at its first terminal to the common node of the diode and the buck switch. A series connection of two resistors is provided in parallel to the buck switch. A control circuitry is provided for controlling the buck switch. A feedback path is connected from the common node of the resistors to the control circuitry. Output terminals are provided, which are connected to a battery, wherein one output terminal is connected to the DC bus voltage, and the other terminal is connected to the second terminal of the inductor.

The inductor, the diode and the battery form a freewheeling path for a current driven by the inductor in the non-conducting state of the buck switch.

The control circuitry is designed to evaluate the signal on the feedback path as a signal indicating the current through the buck switch when the control circuitry controls the buck switch to be conducting, by comparing this signal in this time period with a switching-off threshold value. As soon as the inductor current reaches the threshold value, the control circuitry may control the buck switch into the non-conducting state.

The control circuitry is designed to evaluate and sample a signal on the feedback path as a signal indicating the DC bus voltage in the period following the control of the buck switch into the non-conducting state and prior to the freewheeling current in this period reaching the zero level.

The control circuitry is designed to evaluate and sample the signal on the feedback path as a signal indicating the DC bus voltage minus the battery voltage when the current through the battery has decayed to zero. As previously the DC bus voltage has been sampled, thus the value of the battery voltage can be computed.

The battery may be charged by the buck converter when an AC voltage is present on the input terminals of the LED converter. In case that the AC voltage on the input terminals of the LED converter falls below a certain level or even is interrupted than the buck converter will stop to charge the battery. Such a condition may be an emergency lighting event where emergency lighting is necessary.

A further aspect of the invention relates to an LED converter, especially an emergency light LED converter, comprising a buck converter as explained above, and at least one LED, which can be supplied starting from the battery voltage.

The invention further relates to a method for operating a buck converter for supplying a battery.

Further aspects, features and advantages of the invention will become evident to the skilled person when reading the following explanations of a preferred embodiment of the invention, when taken in conjunction with the figure of the enclosed drawings.

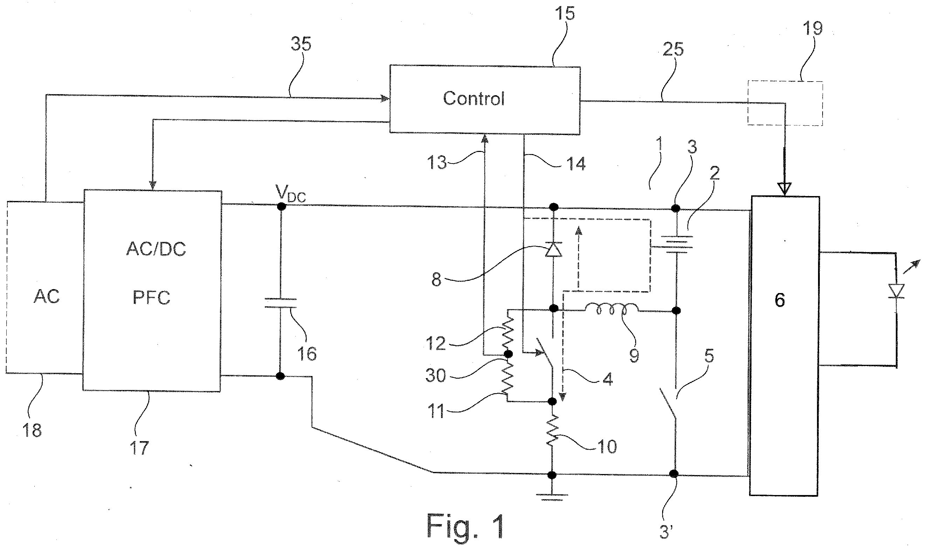

Figure 1 shows a buck converter generally referenced with the numeral 1.

Typically, the buck converter 1 is supplied starting from an AC voltage 18, which may be rectified by an AC/DC block 17, which may comprise also a PFC (power factor correction) functionality. If the PFC is an actively controlled PFC, a control circuitry 15 may issue a control command to one or more switches of the PFC unit. The AC/DC block 17 may be formed by a flyback converter acting as isolated PFC or may be formed by a non-isolated converter like a boost converter acting as PFC followed by a flyback converter which takes over the isolating functionality.

The output of block AC/DC 17 is typically stabilized by a capacitor 16. The voltage at the output terminals of AC/DC block 17, thus the voltage across the capacitor 16 will now be referred to as DC bus voltage (or rail voltage) with the reference numeral V_{DC}. A ripple with twice the frequency of the AC voltage 18 may be present on this DC bus voltage V_{DC}.

The DC bus voltage V_{DC} is supplied to the buck converter 1.

The buck converter has a switch 4, which is ground referenced. A low ohmic resistor 10 (e.g. in the order of 1 to 10 ohms) may be connected between the ground potential and the switch 4.

The switch is connected in series with a diode 8. The diode 8 forms a freewheeling path together with an inductor 9 and a battery 2.

The battery 2 is charged by the current produced by the buck converter 1 and thus represents the load of the buck converter 1.

Preferably the battery 2 is charged by the buck converter 1 when an AC voltage 18 is present on the input terminals of the LED converter. In case that the AC voltage 18 on the input terminals of the LED converter falls below a certain level or even is interrupted then the buck converter 1 will stop to charge the battery 2. Such a condition may be an emergency lighting event where emergency lighting is necessary.

The inductor 9 at its one end is connected to the common node of the switch 4 and diode 8.

The other end of the inductor 9 is connected to the ground potential.

The battery 3 may be disconnected by a switch 5, wherein the switch 5 may also be controlled by a control signal from the control circuitry 15. The switch 5 may be formed by a MOSFET. Switch 5 is preferably closed in the emergency lighting mode to connect the negative pole of battery 3 to the ground, so that the battery 3 can in the emergency lighting mode supply the converter stage 6 from the battery efficiently by reducing the forward drop across the anti-parallel diode of switch 5 (as it is a MOSFET). During battery charging mode of the battery 3 the switch 5 remains off since the battery 3 remains floating in this battery charging mode.

The output terminals 3, 3' of the buck converter 1, at which the voltage of the battery 2 occurs, can be used to drive directly an LED load or, as illustrated in the example, drive the LED load 7 through one or more converter stages 6. The one or more converter stages 6 may comprise switch converter stages, e.g. a boost converter, a tapped boost converter or a buck-boost converter. The control signal for the switch converter stage(s) may be produced by the control circuitry 15 or an additional control circuitry 19.

The additional control circuitry 19 may communicate with the first mentioned control circuitry 15 through a communication path 25.

The LED load may be driven in an emergency lighting mode, e.g. when the AC voltage 18 on the input terminals of the LED converter falls below a certain level or even is interrupted

Importantly, according to the invention a series connection of two resistors 11, 12 is arranged in parallel to the buck switch 4.

A feedback path is connected between the common node 30 of the resistors 11, 12 and an input pin 13 of the control circuitry 15.

As illustrated, further feedback path may be present for the control circuitry 15, such for example a path 35 carrying a signal representing the AC voltage (especially in view of emergency light applications). However, preferably no further feedback path is required for the operation of the buck converter 1, i.e. all feedback signals required for the operation of the buck converter 1 are sent to the control circuitry 15 at the sole input pin 13.

Now the operation of the circuitry will be explained.

When the control circuitry 15 controls the buck converter switch 4 in the conducting state, the current through the buck switch 4 increases, charging the buck inductor. The increasing current produces a signal at the common node of the resistor 30 of the resistors 11, 12 thus that the control circuitry 15 can monitor a signal representing the increasing current through the buck switch 4.

When the increasing current is determined to reach a given switching-off threshold, the control circuitry 15 controls this buck switch 4 into the non-conducting state. In this time period the inductor 9 continues to drive the battery current in the freewheeling path comprising at least the inductor 9, the diode 8 and the battery 2. This freewheeling current decreases until the freewheeling current (discharging current of the inductor 9) reaches the zero crossing level.

During this discharging phase (this is the time period between switching off the buck switch 4 and the inductor current 9 reaching the zero level), the sole feedback pin 13 of the control circuitry 15 measures the level of the bus voltage V_{DC}. Preferably, the control circuitry 15 is designed to sample a value representing the DC bus voltage towards the end of the discharging phase of the inductor current 9, such that the effect of the discharging current is reduced.

Thus, during this discharging phase for the inductor current, the DC bus voltage is sampled and held within the control circuitry 15.

As soon as the inductor current reaches the zero crossing level, the voltage at the input pin 13 rapidly changes to a value, which corresponds to the difference between the DC bus voltage reduced by the voltage across the battery 2. The control circuitry is designed to sample this voltage and correspondingly compute the current value of the voltage of the battery 2 in view of the previously sampled value for the DC bus voltage.

In addition, the timing of the rapid change of the voltage at the feedback input pin 13 of the control circuitry 15 represents the timing of the zero crossing of the inductor current. This timing information can be used in order to determine the next switching-on cycle timing of the buck switch 4, be it in the critical mode or in the non-continuous mode of the buck converter 1.

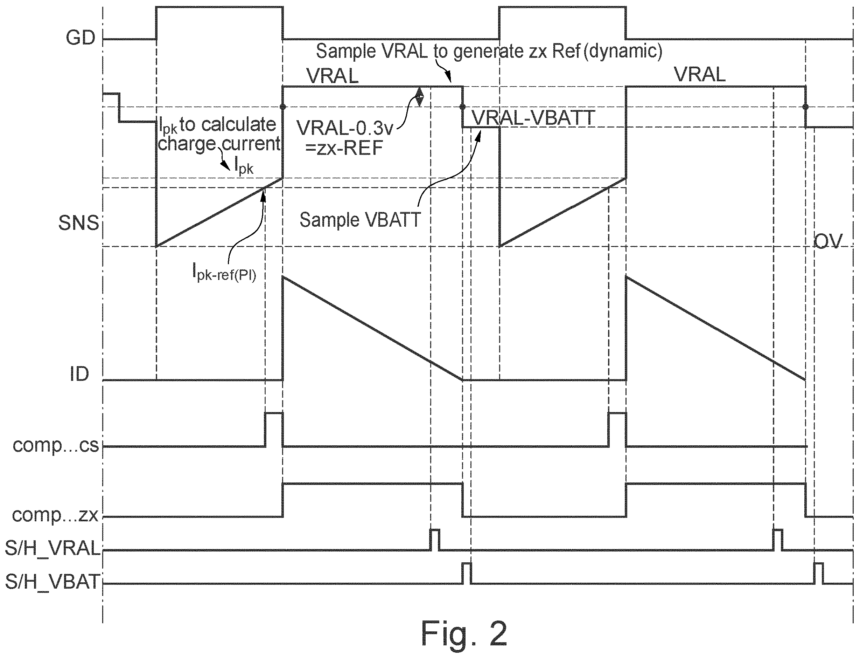

As shown in figures 1 and 2, thus a single feedback pin 13 is sufficient in order to convey to the control circuitry 15 the information as to the zero crossing timing, the value of the increasing switch current during the switching-on phase of the buck switch 4, as well as the battery voltage and even the level of the DC bus voltage V_{DC}.

In a sixth aspect of the present disclosure, a buck converter for supplying a battery comprises:
- a series connection of a diode and a buck switch, the series connection being connected between a DC bus voltage and a ground reference,
- an inductor connected at its first terminal to the common node of the diode and the buck switch,
- a series connection of two resistors in parallel to the buck switch,
- a control circuitry for controlling the buck switch,
wherein a feedback path is connected from the common node of the resistors to the control circuitry, and
- output terminals connected to a battery, wherein one output terminal is connected to the DC bus voltage, and the other terminal is connected to the second terminal of the inductor.

The control circuitry is designed to evaluate the signal on the feedback path as a signal indicating the current through the buck switch when the control circuitry controls the buck switch to be conducting, by comparing it with a switching-off threshold.

The control circuitry is designed to evaluate and sample the signal on the feedback path as a signal indicating the DC bus voltage in the period following the control of the buck switch into the non-conducting state and prior to a freewheeling current reaching a zero level.

The control circuitry is designed to evaluate and sample the signal on the feedback path as a signal indicating the DC bus voltage minus the battery voltage when the current through the battery has decayed to zero.

In an eighth aspect of the present disclosure, an LED converter, especially an emergency light LED converter, comprises a buck converter according to the sixth aspect of the present disclosure, and at least one LED which can be supplied starting from the battery voltage.

In a ninth aspect of the present disclosure, a method for operating a buck converter for supplying a battery is provided. The buck converter comprises:
- a series connection of a diode and a buck switch, the series connection being connected between a DC bus voltage and a ground reference,
- an inductor connected at its first terminal to the common node of the diode and the buck switch,
- a series connection of two resistors parallel to the buck switch,
- a control circuitry for controlling the buck switch,
- output terminals connected to a battery, wherein one output terminal is connected to the DC bus voltage, and the other terminal is connected to the second terminal of the inductor. The method comprises controling the buck switch on the basis of a signal on a feedback path connected from the common node of the resistors to the control circuitry, comprising evaluating and sampling the signal on the feedback path as a signal indicating the DC bus voltage in a period following a control of the buck switch into a non-conducting state and prior to a freewheeling current reaching a zero level; evaluating and sampling the signal on the feedback path as a signal indicating the DC bus voltage minus a battery voltage when a current through the battery has decayed to zero; and evaluating the signal on the feedback path as a signal indicating the current through the buck switch when the control circuitry controls the buck switch to be conducting, by comparing it with a switching-off threshold.

## Claims

1. Buck converter (1) for supplying a battery (2), comprising:
- a series connection of a diode (8) and a buck switch (4), the series connection being connected between a DC bus voltage (V_{DC}) and a ground reference,
- an inductor (9) connected at its first terminal to a common node of the diode (8) and the buck switch (4),
- a series connection of two resistors (11, 12) in parallel to the buck switch (4),
- a control circuitry (15) for controlling the buck switch (4), wherein a feedback path is connected from a common node (30) of the resistors (11, 12) to the control circuitry (15), and
- output terminals (3, 3') connectable to the battery (2), wherein one output terminal (3) is connected to the DC bus voltage (V_{DC}), and the other terminal (3') is connected to the second terminal of the inductor (9);
wherein the control circuitry (15) is designed to evaluate and sample a signal on the feedback path as a signal indicating the DC bus voltage (V_{DC}) in a period following a control of the buck switch (4) into a non-conducting state and prior to a freewheeling current reaching a zero level; and
wherein the control circuitry (15) is designed to evaluate and sample the signal on the feedback path as a signal indicating the DC bus voltage (V_{DC}) minus a battery voltage when a current through the battery (2) has decayed to zero; and
wherein the control circuitry (15) is designed to evaluate the signal on the feedback path as a signal indicating the current through the buck switch (4) when the control circuitry (15) controls the buck switch (4) to be conducting, by comparing it with a switching-off threshold.

2. An LED converter, comprising a buck converter (1) according to claim 1, and at least one LED which is configured to be supplied starting from the battery voltage.

3. A method for operating a buck converter (1) for supplying a battery (2), the buck converter (1) comprising:
- a series connection of a diode (8) and a buck switch (4), the series connection being connected between a DC bus voltage (V_{DC}) and a ground reference,
- an inductor (9) connected at its first terminal to a common node of the diode (8) and the buck switch (4),
- a series connection of two resistors (11, 12) in parallel to the buck switch (4),
- a control circuitry (15) for controlling the buck switch (4), and
- output terminals (3, 3') connectable to the battery (2), wherein one output terminal (3) is connected to the DC bus voltage (V_{DC}), and the other terminal (3) is connected to the second terminal of the inductor (9),
the method comprising:
controling the buck switch (4) on the basis of a signal on a feedback path connected from a common node (30) of the resistors (11, 12) to the control circuitry (15), comprising
evaluating and sampling the signal on the feedback path as a signal indicating the DC bus voltage (V_{DC}) in a period following a control of the buck switch (4) into a non-conducting state and prior to a freewheeling current reaching a zero level;
evaluating and sampling the signal on the feedback path as a signal indicating the DC bus voltage (V_{DC}) minus a battery voltage when a current through the battery (2) has decayed to zero; and
evaluating the signal on the feedback path as a signal indicating the current through the buck switch (4) when the control circuitry (15) controls the buck switch (4) to be conducting, by comparing it with a switching-off threshold.

## Patentansprüche

1. Abwärtswandler (1) zum Versorgen einer Batterie (2), umfassend:
- eine Reihenverbindung aus einer Diode (8) und einem Abwärtsschalter (4), wobei die Reihenverbindung zwischen einer Gleichstrombusspannung (V_{DC}) und einer Erdungsreferenz besteht,
- einen Induktor (9), der an seinem ersten Anschluss mit einem gemeinsamen Knoten der Diode (8) und des Abwärtsschalter (4) verbunden ist,
- eine Reihenverbindung aus zwei Widerständen (11, 12) parallel zu dem Abwärtsschalter (4),
- eine Steuerschaltung (15) zum Steuern des Abwärtsschalters (4), wobei ein Rückkopplungspfad von einem gemeinsamen Knoten (30) der Widerstände (11, 12) mit der Steuerschaltung (15) verbunden ist, und
- Ausgangsanschlüsse (3, 3'), die mit der Batterie (2) verbindbar sind, wobei ein Ausgangsanschluss (3) mit der Gleichstrombusspannung (V_{DC}) verbunden ist und der andere Anschluss (3') mit dem zweiten Anschluss des Induktors (9) verbunden ist;
wobei die Steuerschaltung (15) ausgelegt ist, um ein Signal auf dem Rückkopplungspfad als ein Signal auszuwerten und abzutasten, das die Gleichstrombusspannung (V_{DC}) in dem Zeitraum anzeigt, der nach einer Steuerung des Abwärtsschalters (4) in einen nichtleitenden Zustand ist und bevor ein Freilaufstrom einen Nullpegel erreicht; und
wobei die Steuerschaltung (15) ausgelegt ist, um das Signal auf dem Rückkopplungspfad als ein Signal auszuwerten und abzutasten, das die Gleichstrombusspannung (V_{DC}) minus eine Batteriespannung anzeigt, wenn ein Strom durch die Batterie (2) auf null abgefallen ist; und
wobei die Steuerschaltung (15) ausgelegt ist, um das Signal auf dem Rückkopplungspfad als ein Signal auszuwerten, das den Strom durch den Abwärtsschalter (4) anzeigt, wenn die Steuerschaltung (15) den Abwärtsschalter (4) steuert, um leitend zu sein, durch ein Vergleichen davon mit einem Ausschaltschwellenwert.

2. LED-Wandler, umfassend einen Abwärtswandler (1) nach Anspruch 1 und mindestens eine LED, die konfiguriert ist, um ausgehend von der Batteriespannung versorgt zu werden.

3. Verfahren zum Betreiben eines Abwärtswandlers (1) zum Versorgen einer Batterie (2), der Abwärtswandler (1) umfassend:
- eine Reihenverbindung aus einer Diode (8) und einem Abwärtsschalter (4), wobei die Reihenverbindung zwischen einer Gleichstrombusspannung (V_{DC}) und einer Erdungsreferenz besteht,
- einen Induktor (9), der an seinem ersten Anschluss mit einem gemeinsamen Knoten der Diode (8) und des Abwärtsschalter (4) verbunden ist,
- eine Reihenverbindung aus zwei Widerständen (11, 12) parallel zu dem Abwärtsschalter (4),
- eine Steuerschaltung (15) zum Steuern des Abwärtsschalters (4) und
- Ausgangsanschlüsse (3, 3'), die mit der Batterie (2) verbindbar sind, wobei ein Ausgangsanschluss (3) mit der Gleichstrombusspannung (V_{DC}) verbunden ist und der andere Anschluss (3) mit dem zweiten Anschluss des Induktors (9) verbunden ist,
das Verfahren umfassend:
Steuern des Abwärtsschalters (4) auf der Basis eines Signals auf einem Rückkopplungspfad, der von einem gemeinsamen Knoten (30) der Widerstände (11, 12) mit der Steuerschaltung (15) verbunden ist, umfassend
Auswerten und Abtasten des Signals auf dem Rückkopplungspfad als ein Signal, das die Gleichstrombusspannung (V_{DC}) in einem Zeitraum anzeigt, der nach einer Steuerung des Abwärtsschalters (4) in einen nichtleitenden Zustand ist und bevor ein Freilaufstrom einen Nullpegel erreicht;
Auswerten und Abtasten des Signals auf dem Rückkopplungspfad als ein Signal, das die Gleichstrombusspannung (V_{DC}) minus eine Batteriespannung anzeigt, wenn ein Strom durch die Batterie (2) auf null abgefallen ist; und
Auswerten des Signals auf dem Rückkopplungspfad als ein Signal, das den Strom durch den Abwärtsschalter (4) anzeigt, wenn die Steuerschaltung (15) den Abwärtsschalter (4) steuert, um leitend zu sein, durch das Vergleichen davon mit einem Ausschaltschwellenwert.

## Revendications

1. Convertisseur abaisseur (1) permettant d'alimenter une batterie (2), comprenant :
- une connexion en série d'une diode (8) et d'un commutateur abaisseur (4), la connexion en série étant connectée entre une tension de bus CC (V_{DC}) et une référence de masse,
- un inducteur (9) connecté au niveau de sa première borne à un nœud commun de la diode (8) et du commutateur abaisseur (4),
- une connexion en série de deux résistances (11, 12) en parallèle au commutateur abaisseur (4),
- un système de circuits de commande (15) permettant de commander le commutateur abaisseur (4), dans lequel un chemin de rétroaction est connecté à partir d'un nœud commun (30) des résistances (11, 12) au système de circuits de commande (15), et
- des bornes de sortie (3, 3') pouvant être connectées à la batterie (2), dans lequel une borne de sortie (3) est connectée à la tension de bus CC (V_{DC}), et l'autre borne (3') est connectée à la seconde borne de l'inducteur (9) ;
dans lequel le système de circuits de commande (15) est conçu pour évaluer et échantillonner un signal sur le chemin de rétroaction en tant que signal indiquant la tension de bus CC (V_{DC}) dans une période suivant une commande du commutateur abaisseur (4) dans un état non conducteur et avant qu'un courant de marche à vide n'atteigne un niveau zéro ; et
dans lequel le système de circuits de commande (15) est conçu pour évaluer et échantillonner le signal sur le chemin de rétroaction en tant que signal indiquant la tension de bus CC (V_{DC}) moins une tension de batterie lorsqu'un courant à travers la batterie (2) est tombé à zéro ; et
dans lequel le système de circuits de commande (15) est conçu pour évaluer le signal sur le chemin de rétroaction en tant que signal indiquant le courant à travers le commutateur abaisseur (4) lorsque le système de circuits de commande (15) commande le commutateur abaisseur (4) pour être conducteur, en le comparant à un seuil de déconnexion.

2. Convertisseur à DEL, comprenant un convertisseur abaisseur (1) selon la revendication 1, et au moins une DEL qui est configurée pour être alimentée en partant de la tension de batterie.

3. Procédé destiné à faire fonctionner un convertisseur abaisseur (1) permettant d'alimenter une batterie (2), le convertisseur abaisseur (1) comprenant :
- une connexion en série d'une diode (8) et d'un commutateur abaisseur (4), la connexion en série étant connectée entre une tension de bus CC (V_{DC}) et une référence de masse,
- un inducteur (9) connecté au niveau de sa première borne à un nœud commun de la diode (8) et du commutateur abaisseur (4),
- une connexion en série de deux résistances (11, 12) en parallèle au commutateur abaisseur (4),
- un système de circuits de commande (15) permettant de commander le commutateur abaisseur (4), et
- des bornes de sortie (3, 3') pouvant être connectées à la batterie (2), dans lequel une borne de sortie (3) est connectée à la tension de bus CC (V_{DC}), et l'autre borne (3) est connectée à la seconde borne de l'inducteur (9),
le procédé comprenant :
la commande du commutateur abaisseur (4) en fonction d'un signal sur un chemin de rétroaction connecté à partir d'un nœud commun (30) des résistances (11, 12) au système de circuits de commande (15), comprenant
l'évaluation et l'échantillonnage du signal sur le chemin de rétroaction en tant que signal indiquant la tension de bus CC (V_{DC}) dans une période suivant une commande du commutateur abaisseur (4) dans un état non conducteur et avant qu'un courant de marche à vide n'atteigne un niveau zéro ;
l'évaluation et l'échantillonnage du signal sur le chemin de rétroaction en tant que signal indiquant la tension de bus CC (V_{DC}) moins une tension de batterie lorsqu'un courant à travers la batterie (2) est tombé à zéro ; et
l'évaluation du signal sur le chemin de rétroaction en tant que signal indiquant le courant à travers le commutateur abaisseur (4) lorsque le système de circuits de commande (15) commande le commutateur abaisseur (4) pour être conducteur, en le comparant à un seuil de déconnexion.
